# EUROPÄISCHE PATENTSCHRIFT

(11) **EP 0 686 582 B1**
(45) Veröffentlichungstag und Bekanntmachung des Hinweises auf die Patenterteilung: **26.08.1998**
(21) Anmeldenummer: 95890102.7
(22) Anmeldetag: 01.06.1995
(51) Int. Cl.: B65G 1/137, B65G 47/49

(54) **Einrichtung zum Lagern und Bereitstellen von Kleinteilen sowie Verfahren zur Entnahme von Lagergut aus einem Lager**
Installation for storing and placing at disposal small parts and method for taking out store goods
Installation pour stocker et mettre à disposition des petites pièces ainsi que procédé pour prendre des marchandises entreposées

(30) Priorität: 06.06.1994 AT 1137/94
(43) Veröffentlichungstag der Anmeldung: 13.12.1995
(73) Patentinhaber: Siemens Aktiengesellschaft Österreich, 1210 Wien (AT)
(72) Erfinder: Derflinger, Martin, A-1010 Wien (AT)
(74) Vertreter: Peham, Alois, Dipl.-Ing.

(56) Entgegenhaltungen:
- DE-A- 3 408 081

## Beschreibung

Die Erfindung bezieht sich auf eine Einrichtung zum Lagern und Entnehmen von Kleinteilen wie z.B. Drogeriewaren, Pharmazeutika, od. dgl., bei welcher das Lagergut in Lagerbehältern in definierten Lagerpositionen abgelegt wird sowie auf ein Verfahren zum Ablegen und Entnehmen von Lagergut, insbesondere pharmazeutischen Zubereitungen, aus einem Lager.

Für die Lagerung von Kleinteilen, wie beispielsweise Drogeriewaren, Pharmazeutika od. dgl., ist es bekannt, Regalsysteme zu verwenden. Es ist weiters bereits bekannt, die Ablage dahingehend zu organisieren, daß einzelne Lagerpositionen im Inneren eines geschlossenen Schrankes, beispielsweise nach Art eines Aufzuges, manövriert werden und in eine Entnahmeposition gebracht werden. Bei all den bekannten Einrichtungen wird in der Regel eine manuelle Beschickung und eine manuelle Entnahme aus mehr oder weniger komplexen Lagersystemen vorgeschlagen.

Insbesondere bei der Lagerung von empfindlichen Kleinteilen bzw. Drogeriewaren oder Pharmazeutika, welche unter definierten klimatischen Bedingungen gelagert werden müssen und deren freie Zugänglichkeit aus sicherheitstechnischen Gründen weitestgehend behindert werden soll, sind derartige umfassende Lagerräumlichkeiten sowohl sicherheitstechnisch als auch aufgrund der erforderlichen Klimatisierung mit einer Reihe von Nachteilen behaftet. Ein wesentlicher Nachteil der bekannten Systeme besteht aber darin, daß die Beschickung bzw. Bestückung des Lagers in aller Regel aufwendige Handarbeit erfordert und zeitintensiv ist.

Aus der DE-A-3408081 ist eine automatische Kommissioniereinrichtung bekannt, bei der die zu kommissionierenden Güter mittels eines elektronisch gesteuerten Manipulators aus einem Behälter geholt und in einem durch eine maschinenlesbare Codierung auf dem Gut bestimmten Regalfach eines Lagers abgelegt werden.

Die Erfindung zielt nun darauf ab, eine Einrichtung der eingangs genannten Art zu schaffen, bei welcher sowohl die Befüllung als auch die Entnahme aus dem Lager und der Transport zu einer Ausgabestelle automatisch erfolgt.

Zur Lösung dieser Aufgabe besteht die erfindungsgemäße Einrichtung darin, daß ein elektronisch gesteuerter Manipulator mit einem Greifer in die jeweilige Lagerposition verfahrbar ist, daß die jeweilige Position des Greifers überwacht und über Signalleitungen mit einer zentralen Steuerung verbunden ist, daß die Lagerbehälter durch den Manipulator in eine Versandposition verschwenkbar sind und daß die Lagerbehälter oder ein Sammelbehälter für die Aufnahme des Inhaltes mehrerer Ladebehälter mit einem Rohrpostbehälter einer Rohrpostanlage gegen Entleeren gesichert verbindbar sind. Dadurch, daß ein elektronisch gesteuerter Manipulator mit einem Greifer verwendet wird, wird die Voraussetzung geschaffen, ein nach bestimmten Kriterien organisiertes Lager mittels eines derartigen Manipulators zu beschicken, um aus der jeweils gespeicherten Position durch einen Manipulator die Entnahme aus der Lagerposition zu bewerkstelligen. Dadurch, daß nun ein derartiger elektronisch gesteuerter Manipulator die jeweilige Position des Greifers überwacht und über Signalleitungen mit einer zentralen Steuerung verbunden ist, wird die Voraussetzung geschaffen, jeweils ein bestimmtes Produkt einer bestimmten Lagerposition zuzuordnen und umgekehrt aus einer vorgegebenen Lagerposition ein im zentralen Speicher der elektronischen Steuerung gleichfalls unter der entsprechenden Adresse abgespeichertes Produkt wiederum in eine Versandposition zu verbringen. Neben der elektronischen Überwachung der jeweiligen Position der Greifer, welche beispielsweise als Saugnäpfe ausgebildet sein können, kann in konventioneller Weise eine Lesestation vorgesehen sein, wobei der Greifer ebenso wie bei Automatenkassen das jeweils zu lagernde Produkt durch die Lesestation erfassen läßt und die gescannten Daten gleichfalls dem zentralen Speicher der zentralen Steuerung zur Verfügung stellt. Die Artikeldaten für die zu lagernden Kleinteile bzw. Drogeriewaren oder Pharmazeutika können naturgemäß in einer nicht völlig automatischen Station auch händisch eingegeben werden, wofür konventionelle Codes, wie beispielsweise in Apotheken üblich, Verwendung finden können.

Dadurch, daß nun die Lagerbehälter durch den Manipulator in eine Versandposition verschwenkbar sind und daß die Lagerbehälter oder ein Sammelbehälter für die Aufnahme des Inhaltes mehrerer Ladebehälter mit einem Rohrpostbehälter einer Rohrpostanlage gegen Entleeren gesichert verbindbar ist, wird die Möglichkeit geschaffen, den Inhalt der Lagerbehälter bzw. eine Kommission unterschiedlicher Produkte, welche an einer gemeinsamen Ausgabestelle zur Verfügung gestellt werden sollen, zusammenzufassen und als Einzelteil oder als kommissionierte Ansammlung von gleichzeitig bestellten Waren an die Ausgabestelle zu transportieren. Die Rohrpostanlage bietet hiebei die Möglichkeit eine besonders einfache Gestaltung der Transportbehälter, welche einfach mit dem Rohrpostbehälter in einer gegen Verlust der Ware gesicherten Weise verbindbar ist.

In besonders vorteilhafter Weise ist die erfindungsgemäße Ausbildung so weitergebildet, daß die Lagerbehälter oder die Sammelbehälter an einer Stirnseite offen ausgebildet sind und an der offenen Stirnseite Verriegelungselemente für die Verbindung mit einer Wand des Rohrpostbehälters einer Rohrpostanlage, aufweisen. Derartige, an einer Stirnseite offen ausgebildete Lagerbehälter haben den Vorzug, daß sie besonders leicht durch einen Manipulator ergriffen werden können und daß weiters in der Transportstellung eine gegen Entleeren gesicherte Verbindung in einfacher Weise dadurch erzielt werden kann, daß die Rohrpostbehälter nach Art eines Deckels mit dem Lagerbehälter oder einem Sammelbehälter zusammenwirken. Wesentlich für eine derartige Ausbildung ist eine einfache, sichere, mechanisch stabile und mechanisch leicht lösbare Verbindung zwischen Lagerbehälter und Sammelbehälter sowie dem Rohrpostbehälter, wobei eine derartige Verbindung beispielsweise durch einen einfachen Druckknopfverschluß gebildet sein kann. In besonders vorteilhafter Weise ist die Ausbildung hiebei so getroffen, daß der Rohrpostbehälter eine Mehrzahl von konzentrisch zueinander angeordneten Rastvorsprüngen an seinem Boden trägt, welche mit der offenen Stirnseite der Lager- oder Sammelbehälter verrastbar ist.

Je nach Ausgestaltung der Lagerbehälter kann der Greifer des Manipulators in vorteilhafter Weise als Saugnapf ausgebildet sein und den Boden eines Lagerbehälters bzw. Sammelbehälters erfassen. Alternativ sind naturgemäß auch magnetische Kupplungen od. dgl. möglich, welche sich durchwegs dadurch auszeichnen, daß zusätzlich zu der sicheren Verbindung beim Ergreifen ein einfaches Lösen dieser Verbindung und eine sichere Freigabe des Lager- bzw. Sammelbehälters ermöglicht wird.

Mit Vorteil ist die erfindungsgemäße Ausbildung so weitergebildet, daß die Lagerbehälter einen maschinenlesbaren Code tragen, welcher bei Entnahme und Befüllen gelesen und mit im Speicher der zentralen Steuereinrichtung gespeicherten Positionsdaten verglichen wird. Ein derartiger maschinenlesbarer Code am Lagerbehälter ermöglicht nach dem Einlesen des jeweils in einen Lagerbehälter zu füllenden Produktes und die entsprechende logische Verknüpfung dieser Informationen in der Folge die vollautomatische Erfassung aller Operationen, welche mit einem bestimmten Lagerbehälter, und damit mit dem Inhalt dieses Lagerbehälters erfolgt sind. Der maschinenlesbare Code soll beispielsweise von betriebssicheren einfachen Leseeinrichtungen, wie z.B. den in Kaufhäusern üblichen Streifencodelesern, sicher erfaßt werden können, wobei es beispielsweise vorteilhaft ist, einen konventionellen Strichcode für im wesentlichen zylindrische Lagerbehälter so weiterzubilden, daß der Streifencode am Boden des Lagerbehälters kreisförmig angeordnet ist.

Insbesondere für den Verkauf in Apotheken ist es üblich, daß an der Warenausgabe nicht lediglich ein Produkt sondern eine Mehrzahl von Produkten gleichzeitig zur Verfügung gestellt werden soll. Die jeweilige Verkaufsperson fordert die gewünschten Produkte durch Eingabe in die zentrale Steuerung beispielsweise mittels eines Bildschirmterminals an, worauf in der Folge eine Kommissionierung der Ware erfolgen soll, wobei eine Mehrzahl von Inhalten von Lagerbehältern in einem Sammelbehälter kommissioniert wird. Mit Vorteil ist hiefür die Ausbildung so getroffen, daß beim Entnahmevorgang an der Übergabestelle zwischen Manipulator und Rohrpostanlage eine Mehrzahl von Sammelbehältern zum Kommissionieren der Inhalte einer Mehrzahl von Lagerbehältern angeordnet sind, deren Postion jeweils in eine Übergabestellung des Manipulators und eine Übergabestellung bzw. Verbindungsstellung mit der Rohrpostanlage verfahrbar ist, wobei die jeweilige Position der Sammelbehälter erfaßt und gespeichert wird.

Wie bereits eingangs erwähnt, soll durch die erfindungsgemäße Einrichtung nicht nur die kontrollierte Entnahme aus einem Lager ermöglicht werden, sondern auch beim Befüllen eines derartigen Lagers ein hohes Maß an Automatisierung erzielt werden. Zu diesem Zweck ist mit Vorteil die Ausbildung so getroffen, daß die Befüllung leerer Lagerbehälter durch den Manipulator erfolgt, wobei die Codes der Lagerbehälter, die Codes des Lagergutes und die Position im Lager erfaßt und gespeichert werden. Durch die Erfassung der jeweiligen Codes der Lagerbehälter, der Codes des Lagergutes und der Position im Lager läßt sich eine vollständige Beschreibung der im Lager befindlichen Produkte und damit ein vollständiger Ablauf für die Entnahme definieren.

Um bei geringem Platzbedarf ein Maximum an Speicherplatz zu schaffen und gleichzeitig die Manipulationszeiten zu optimieren und eine rasche Entnahme sicherzustellen, ist mit Vorteil die Ausbildung so getroffen, daß der Manipulator in der Ebene der Entnahmestellen des Lagers zweiachsig verfahrbar ist und der Greifer in einer diese Ebene durchsetzenden Richtung verfahrbar und schwenkbar am Manipulator angelenkt ist, wobei vorzugsweise wenigstens drei verschiedene Größen von Lagerbehältern mit unterschiedlichem Durchmesser vorgesehen sind. Insbesondere die Beschränkung auf eine geringe Anzahl verschieden großer Lagerbehälter erlaubt hiebei wesentliche Rationalisierungen bei der Verwaltung des Platzbedarfes im Lager und bei der Manipulation.

Wie bereits eingangs erwähnt, ist insbesondere für Pharmazeutika oder andere empfindliche Kleinteile in einem derartigen Lager die Ausbildung mit Vorteil so getroffen, daß die Lager zumindest teilweise klimatisiert bzw. gekühlt angeordnet sind.

Das erfindungsgemäße Verfahren zum Entnehmen und Ablegen von Ladegut, insbesondere pharmazeutischen Zubereitungen aus einem Lager, ist dadurch gekennzeichnet, daß die Daten des gewünschten Lagergutes über ein Terminal in einen zentralen Rechner eingegeben wird, daß die Position des Lagergutes im Lager im Speicher des zentralen Rechners ermittelt wird, daß der Manipulator in die jeweils ermittelte Position verfahren wird und nach dem Ergreifen des Lagerbehälters an eine Übergabestelle an die oder von der Rohrpostanlage bewegt wird und daß nach einem Einlesen des Codes des Lagerbehälters und Vergleich mit gespeicherten Werten der Transport zur Ausgabestelle veranlaßt wird.

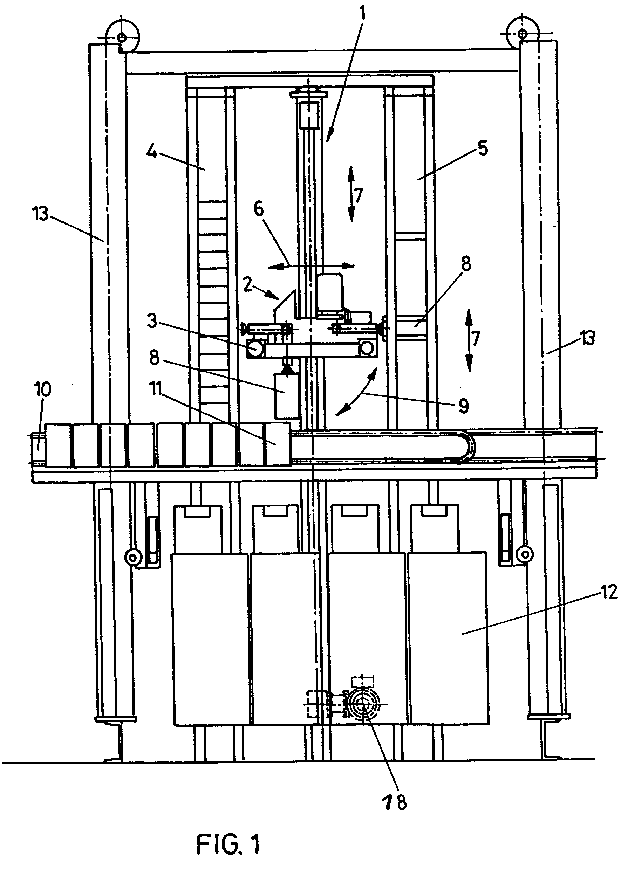

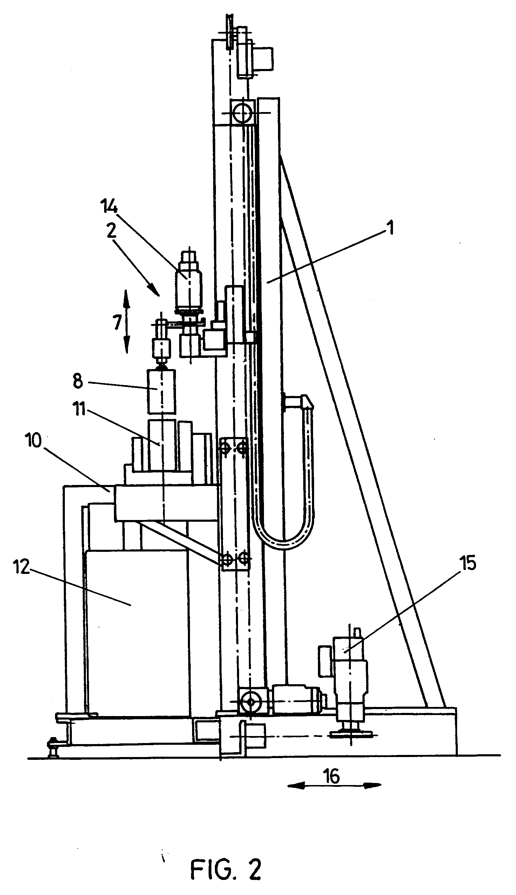

Die Erfindung wird nachfolgend anhand eines in der Zeichnung schematisch dargestellten Ausführungsbeispieles näher erläutert. In dieser zeigen Fig.1 eine Ansicht auf den Manipulator und das Regalsystem von vorne teilweise im Schnitt und Fig.2 eine Seitenansicht des Manipulators.

In Fig. 1 ist ein Manipulator 1 ersichtlich, dessen Greifvorrichtung 2 über einen Querantrieb 3 zwischen zwei Regalen 4 und 5 bewegt werden kann. Neben dieser Querbeweglichkeit durch den Querantrieb 3 im Sinne des Doppelpfeiles 6 ist eine Höhenverstellbarkeit in Richtung des Doppelpfeiles 7 am Manipulator vorgesehen, wofür ein Hubantrieb 18 vorgesehen ist. Die Greifvorrichtung 2 ist so ausgebildet, daß jeweils Transportbehälter 8 aus dem jeweiligen Regal 4 oder 5 entnommen werden können und durch den Querantrieb 3 zunächst in eine Position verfahren werden können, in welcher nach einem Verschwenken im Sinne des Doppelpfeiles 9 eine Übergabe an eine Bühne 10 zum Vorkommissionieren der Waren erfolgen kann. Nach Verschwenken des Lagerbehälters 8 in eine mit einem Sammelbehälter 11 fluchtende Lage erfolgt die Aufnahme des Inhaltes des Lagerbehälters 8 durch den Sammelbehälter, und der Sammelbehälter kann durch einen entsprechenden Antrieb der heb- und senkbaren Vorkommissionierungsbühne 10 in eine entsprechende Position gebracht werden, welche die Übergabe an eine Rohrpost 12 ermöglicht. Bei der Darstellung nach Fig.1 sind vier Rohrpoststationen vorgesehen. Die Vorkommissionierungsbühne 10 ist an einem Grundgestell 13 höhenverstellbar, und ein Querantrieb bewirkt die korrekte Positionierung des Behälters 11 relativ zur Rohrpost. Vor dem Absenden wird der jeweilig mit der korrekten Ware befüllte Behälter 11 mit dem Rohrpostbehälter gekuppelt, sodaß ein sicherer Transport ohne Verlust der Ware in der Rohrpostanlage möglich ist.

Am Manipulator und im besonderen an der Greifvorrichtung sind zusätzlich Scanner angeordnet, um die jeweiligen Sammel- bzw. Lagerbehälter 8 sicher identifizieren zu können. Zusätzlich kann an der Vorkommissionierungsbühne ein weiterer Scanner vorgesehen sein, um auch bei der Übergabe an den Transportbehälter 11 die exakte Zuordnung zwischen gewünschter Ware und in der Folge der Rohrpoststation überwachen zu können.

Bei der Darstellung nach Fig.2 ist der Manipulator in der Seitenansicht dargestellt, wobei hier eine Position gezeichnet ist, bei welcher der Schwenkantrieb 14 den vom Greifer erfaßten Lagerbehälter 8 in eine mit einem Sammelbehälter 11 fluchtende Postition verschwenkt hat. Der Schwenkantrieb 14 bewirkt hiebei die Verschwenkung im Sinne des Doppelpfeiles 9 der Fig.1, wobei der Hubantrieb wiederum in Richtung des Doppelpfeiles 7 wirksam ist. Zusätzlich ist nun eine Verfahrbarkeit des Manipulators 1 in Längsrichtung, d.h. quer zu der in Fig.1 dargestellten Bewegungsrichtung entsprechend dem Doppelpfeil 6 vorgesehen, um alle Positionen von Lagerbehältern 8 in den Regalen 4 und 5 sicher erreichen zu können. Der Längsantrieb 15 bewirkt hiebei ein Verfahren des Manipulators 1 im Sinne des Doppelpfeiles 16 und damit im wesentlichen parallel zur Entnahmeebene der Regale 4 bzw. 5.

Die Greifvorrichtung 2 kann beliebig ausgebildet sein. Es kommen Sauger, Klauen und im besonderen spreizbare Arme in Betracht. Wenn für den Transport in der Folge regelmäßig ein Sammelbehälter 11 eingesetzt wird, können Saugfüße am Boden des Lagerbehälters 8 angreifen, wobei dieser Lagerbehälter 8 an einer Stirnseite offen ist und nach dem Verschwenken durch den Schwenkantrieb 14 in einen Sammelbehälter 11 entleert wird.

## Patentansprüche

1. Einrichtung zum Lagern und Entnehmen von Kleinteilen wie z.B. Drogeriewaren, Pharmazeutika, od.dgl., bei welcher das Lagergut in Lagerbehältern (8) in definierten Lagerpositionen abgelegt wird, dadurch gekennzeichnet, daß ein elektronisch gesteuerter Manipulator (1) mit einem Greifer (2) in die jeweilige Lagerposition verfahrbar ist, daß die jeweilige Position des Greifers (2) überwacht und über Signalleitungen mit einer zentralen Steuerung verbunden ist, daß die Lagerbehälter (8) durch den Manipulator (1) in eine Versandposition verschwenkbar sind und daß die Lagerbehälter (8) oder ein Sammelbehälter (11) für die Aufnahme des Inhaltes mehrerer Lagerbehälter (8) mit einem Rohrpostbehälter einer Rohrpostanlage (12) gegen Entleeren gesichert verbindbar sind.

2. Einrichtung nach Anspruch 1, dadurch gekennzeichnet, daß die Lagerbehälter (8) oder die Sammelbehälter an einer Stirnseite offen ausgebildet sind und an der offenen Stirnseite Verriegelungselemente für die Verbindung mit einer Wand eines Rohrpostbehälters einer Rohrpostanlage(12) aufweisen.

3. Einrichtung nach Anspruch 1 oder 2, dadurch gekennzeichnet, daß der Rohrpostbehälter eine Mehrzahl von konzentrisch zueinander angeordneten Rastvorsprüngen an seinem Boden trägt, welche mit der offenen Stirnseite der Lagerbehälter (8) oder Sammelbehälter (11) verrastbar ist.

4. Einrichtung nach Anspruch 1, 2 oder 3, dadurch gekennzeichnet, daß die Lagerbehälter (8) einen maschinenlesbaren Code tragen, welcher bei Entnahme und Befüllen gelesen und mit im Speicher einer zentralen Steuereinrichtung gespeicherten Positionsdaten verglichen wird.

5. Einrichtung nach einem der Ansprüche 1 bis 4, dadurch gekennzeichnet, daß beim Entnahmevorgang an der Übergabestelle zwischen Manipulator (1) und Rohrpostanlage (12) eine Mehrzahl von Sammelbehältern (11) zum Kommissionieren der Inhalte einer Mehrzahl von Lagerbehältern (8) angeordnet sind, deren Position jeweils in eine Übergabestellung des Manipulators (1) und eine Übergabestellung bzw. Verbindungsstellung mit der Rohrpost verfahrbar ist, wobei die jeweilige Position der Sammelbehälter erfaßt und gespeichert wird.

6. Einrichtung nach einem der Ansprüche 1 bis 5, dadurch gekennzeichnet, daß die Befüllung leerer Lagerbehälter (8) durch den Manipulator (1) erfolgt, wobei die Codes der Lagerbehälter (8), die Codes des Lagergutes und die Position im Lager erfaßt und gespeichert werden.

7. Einrichtung nach einem der Ansprüche 1 bis 6, dadurch gekennzeichnet, daß die Lagerbehälter (8) als zylindrische, topfartige Behälter ausgebildet sind und an ihrem Boden einen kreisförmig angeordneten Streifencode aufweisen.

8. Einrichtung nach einem der Ansprüche 1 bis 7, dadurch gekennzeichnet, daß der Manipulator (1) in der Ebene der Entnahmestellen des Lagers zweiachsig verfahrbar ist und der Greifer (2) in einer diese Ebene durchsetzenden Richtung verfahrbar und schwenkbar am Manipulator (1) angelenkt ist.

9. Einrichtung nach einem der Ansprüche 1 bis 8, dadurch gekennzeichnet, daß wenigstens drei verschiedene Größen von Lagerbehältern (8) mit unterschiedlichem Durchmesser vorgesehen sind.

10. Einrichtung nach einem der Ansprüche 1 bis 9, dadurch gekennzeichnet, daß die Lager zumindest teilweise klimatisiert bzw. gekühlt angeordnet sind.

11. Verfahren zum Betrieb einer Einrichtung nach einem der Ansprüche 1 bis 10, dadurch gekennzeichnet, daß die Daten des gewünschten Lagergutes über ein Terminal in einen zentralen Rechner eingegeben wird, daß die Position des Lagergutes im Lager im Speicher des zentralen Rechners ermittelt wird, daß der Manipulator (1) in die jeweils ermittelte Position verfahren wird und nach dem Ergreifen des Lagerbehälters an eine Übergabestelle an oder von der Rohrpostanlage (12) bewegt wird und daß nach einem Einlesen des Codes des Lagerbehälters (8) und Vergleich mit gespeicherten Werten den Transport zur Ausgabestelle veranlaßt wird.

## Claims

1. Apparatus for the storage and removal of small articles such as, for example, drugs, pharmaceutical products or the like, in the case of which the stored goods are deposited in defined storage positions in storage containers (8), characterized in that an electronically controlled manipulator (1) with a gripper (2) can be displaced into the respective storage position, in that the respective position of the gripper (2) is monitored and connected to a central control means via signal lines, in that the storage containers (8) can be pivoted into a dispatch position by the manipulator (1), and in that the storage containers (8) or a collecting container (11) for receiving the contents of a plurality of storage containers (8) can be connected to a pneumatic-post container of a pneumatic-post system (12) so as to be secured against emptying.

2. Apparatus according to Claim 1, characterized in that the storage containers (8) or the collecting containers are designed to be open on one end side and, on the open end side, have locking elements for connection to a wall of a pneumatic-post container of a pneumatic-post system (12).

3. Apparatus according to Claim 1 or 2, characterized in that the pneumatic-post container bears, on its base, a plurality of concentrically arranged latching protrusions which can be latched to the open end side of the storage containers (8) or collecting containers (11).

4. Apparatus according to Claim 1, 2 or 3, characterized in that the storage containers (8) bear a machine-readable code which is read during the removal and filling operations and compared with position data which is stored in the memory of a central control means.

5. Apparatus according to one of Claims 1 to 4, characterized in that arranged, during the removal operation, at the transfer location between the manipulator (1) and pneumatic-post system (12) are a plurality of collecting containers (11) for the order-picking of the contents of a plurality of storage containers (8), and the position of said collecting containers can be displaced in each case into a transfer position of the manipulator (1) and a transfer position or connecting position to the pneumatic post, the respective position of the collecting containers being sensed and stored.

6. Apparatus according to one of Claims 1 to 5, characterized in that empty storage containers (8) are filled by the manipulator (1), the codes of the storage containers (8), the codes of the stored goods and the position in the store being sensed and stored.

7. Apparatus according to one of Claims 1 to 6, characterized in that the storage containers (8) are designed as cylindrical, cup-like containers and, on their base, have a bar code arranged in the form of a circle.

8. Apparatus according to one of Claims 1 to 7, characterized in that the manipulator (1) can be displaced in two axes in the plane of the locations for removal from the store, and the gripper (2) is articulated in the manipulator (1) pivotably and displaceably in a direction which passes through said plane.

9. Apparatus according to one of Claims 1 to 8, characterized in that at least three different sizes of storage containers (8) of different diameters are provided.

10. Apparatus according to one of Claims 1 to 9, characterized in that the stores are arranged so as to be at least partially temperature-conditioned or cooled.

11. Method of operating an apparatus according to one of Claims 1 to 10, characterized in that the data of the desired stored goods is input into a central computer via a terminal, in that the position of the stored goods in the store is determined in the memory of the central computer, in that the manipulator (1) is displaced into the respectively determined position and, once the storage container has been gripped, is moved to a transfer location to or from the pneumatic-post system (12), and in that, once the code of the storage container (8) has been read in and compared with stored values, transportation to the discharge location is initiated.

## Revendications

1. Dispositif pour stocker et prélever des petites pièces telles, par exemple, que des articles de droguerie, des produits pharmaceutiques ou analogues, dans lequel la marchandise entreposée est déposée dans des récipients de stockage dans des positions de stockage définies, **caractérisé** en ce qu'un manipulateur (1) à commande électronique, pourvu d'un dispositif de préhension (2), peut être mis dans la position de stockage, en ce que la position du dispositif de préhension (2) est surveillée et transmise par des lignes de signaux à une unité centrale de commande, en ce que les récipients de stockage (8) peuvent être pivotés par le manipulateur (1) pour venir dans une position d'expédition, et en ce que les récipients de stockage (8), ou un récipient collecteur (11) destiné à recevoir le contenu de plusieurs récipients de stockage (8), peuvent être reliés, en étant empêchés d'être vidés, à un récipient d'expédition tubulaire d'une installation d'expédition pneumatique (12).

2. Dispositif selon la revendication 1, **caractérisé** en ce que les récipients de stockage (8) ou les récipients collecteurs sont réalisés ouverts sur un côté frontal, et présentent sur leur côté frontal ouvert des éléments de verrouillage pour les relier à une paroi d'un récipient d'expédition tubulaire d'une installation d'expédition pneumatique (12).

3. Dispositif selon la revendication 1 ou 2, **caractérisé** en ce que le récipient d'expédition tubulaire porte, sur son fond, une pluralité de saillies d'encliquetage disposées concentriquement les unes par rapport aux autres, qui peuvent être assemblées par encliquetage au côté frontal ouvert des récipients de stockage (8) ou récipients collecteurs (11).

4. Dispositif selon la revendication 1, 2 ou 3, **caractérisé** en ce que les récipients de stockage (8) portent un code détectable par machine qui, lors du prélèvement et du remplissage, est lu et comparé à des données de position mémorisées dans la mémoire d'une unité centrale de commande.

5. Dispositif selon une des revendications 1 à 4, **caractérisé** en ce que, lors du processus de prélèvement, une pluralité de récipients collecteurs (11) destinés à rassembler pour l'expédition les contenus d'une pluralité de récipients de stockage (8) sont disposés au point de remise entre le manipulateur (1) et l'installation d'expédition pneumatique (12), récipients dont la position peut être déplacée respectivement dans une position de remise du manipulateur (1) et une position de remise ou encore d'assemblage à l'installation d'expédition pneumatique, la position respective des récipients collecteurs étant détectée et mémorisée.

6. Dispositif selon une des revendications 1 à 5, **caractérisé** en ce que le remplissage de récipients de stockage vides (8) s'effectue par le manipulateur (1), les codes des récipients de stockage (8), les codes des marchandises entreposées et la position dans l'entrepôt étant détectés et mémorisés.

7. Dispositif selon une des revendications 1 à 6, **caractérisé** en ce que les récipients de stockage (8) sont réalisés sous la forme de récipients cylindriques du genre pots, et présentent sur leur fond un code barres disposé circulairement.

8. Dispositif selon une des revendications 1 à 7, **caractérisé** en ce que le manipulateur (1) peut être déplacé sur deux axes dans le plan des points de prélèvement de l'entrepôt, et le dispositif de préhension (2) peut être déplacé dans une direction traversant ce plan et est articulé à pivotement au manipulateur (1).

9. Dispositif selon une des revendications 1 à 8, **caractérisé** en ce qu'il est prévu au moins trois tailles différentes de récipients de stockage (8), de diamètres différents.

10. Dispositif selon une des revendications 1 à 9, **caractérisé** en ce que les entrepôts sont au moins pour partie climatisés ou réfrigérés.

11. Procédé d'exploitation d'un dispositif selon une des revendications 1 à 10, **caractérisé** en ce que les données de la marchandise entreposée souhaitée sont introduites par l'intermédiaire d'un terminal dans un ordinateur central, en ce que la position de la marchandise dans l'entrepôt est déterminée dans la mémoire de l'ordinateur central, en ce que le manipulateur (1) est déplacé dans la position respectivement déterminée et, après avoir saisi le récipient de stockage, est déplacé en un point de remise à ou de l'installation d'expédition pneumatique (12), et en ce que, après lecture du code du récipient de stockage (8) et comparaison avec des valeurs mémorisées, on provoque le transport vers le point de distribution.
